# EUROPEAN PATENT APPLICATION

(11) **EP 4 302 971 A1**
(43) Date of publication of application: **10.01.2024**
(21) Application number: 23183418.5
(22) Date of filing: 04.07.2023
(51) Int. Cl.: B29C 65/08, B29C 65/00, B65D 1/24, B65D 19/18, B65D 6/00, B65D 25/04, B29L 31/00

(54) **SYSTEMS AND METHODS OF MANUFACTURING CONTAINERS FROM POLYMERIC MATERIALS WITH UNWARPED INTERNAL PARTITION**

(30) Priority: 06.07.2022 IL 29456922
(71) Applicant: Plasgad Plastic Products ACS Ltd., 1232500 Kibbutz Gadot (IL)
(72) Inventor: PORAN, Iftah, 1294900 Ramat Ha Golan (IL)
(74) Representative: Harrison IP Limited

(57) **Abstract**

A process of manufacturing containers from polymeric materials with unwarped internal partition is described; a container with unwarped internal partition, manufactured from polymeric materials and a system for manufacturing containers with unwarped internal partition from polymeric materials, are further described; the process comprises: premanufacturing a bottom part of a container, premanufacturing a top part of the container, applying a preheating treatment, appending the top part of the container, welding, cooling down the welded complex of the container; the container comprises: a bottom part, a top part comprising a bottom plate, surrounding sidewalls and at least one interior partition; the system comprises: at least one first premanufacturing subsystem, at least one second premanufacturing subsystem, at least one preheater, an appending mechanism, a welding machine and a cooler.

## Description

### TECHNICAL FIELD

In general, the present invention pertains to the art of plastic manufacture. In particular, the invention relates to systems and methods of manufacturing containers from polymeric materials with unwarped internal partition.

### BACKGROUND ART

Warpage is one of the common quality issues in plastic injection molding. This defect is when there is an excessive distortion of a part after ejection which deviates significantly from the injection mold cavity.

It is believed that the current state of the art is represented by the following patent literature: US2378801 and US2005155324.

US2005155324 that is believed to represent the closest prior art discloses a system of sealing containers of plastic material for the sealing of containers having a mouth surrounded by a peripheral flap, consisting of arranging a sealing sheet on the mouth of the container to be sealed, supporting the peripheral flap on a welding mold, and applying ultrasonic vibrations on the sealing sheet, in coincidence with a mold, by means of independent sonotrodes, the mold comprising two concentric walls situated in coincidence with the peripheral flap surrounding the mouth of the container to be sealed, an internal wall allowing for the welding between the sealing sheet and the peripheral flap of the mouth, and another outer wall, of a slightly larger height, finished in an angled edge profile to cause the cutting of the sealing sheet and of said peripheral flap at a certain variable distance from the weld line between said sheet and peripheral flap.

Warpage of plastic parts according to US7666335B is a result of variations in shrinkage within the part as it is being formed. These variations in shrinkage have generally been attributed to side-to-side variations in mold temperature, anisotropic shrinkage variations resulting from flow induced polymer and filler orientation, and global shrinkage variations (shrinkage variations between regions of a part) resulting from differences in wall thickness, mold temperature, melt temperature and melt pressure.

Warpage is one of the problems during the printing process of polymeric objects by 3D printer. The printed part experiences cycles of heating and cooling as melt layers are deposited on the cooled layers inducing thermal gradient within the parts causing problems such as shrinkage and warpage that may lead to dimensional inaccuracy. Warpage occurs due to uneven heat distribution causing internal stress within printed object parts, which result in curling of the sample when it cools down after printing. Some 3D printers include a heated print bed to ease this problem. The heated print bed heats the build plate and ensures the bottom layers of the printed object are kept warm as more layers are added. Therefore, the object is being cooled evenly and thermal contraction at the base of the part decreased.

### SUMMARY OF THE INVENTION

The following summary of the invention is provided in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

It is an object of the present invention to provide a process of manufacturing containers by welding a polymeric top part to a bottom part. The manufacturing method allows to overcome technical problem of warpage of the interior partition of the top polymeric part, after the colling step of the welded complex of the container.

In some embodiments of the manufacturing process presented herein, a heat source was used for preheating the bottom part prior to the step of ultrasonic welding. The step of preheating the bottom part has proved to prevent warpage of the in internal monolithic partition, which has occurred after applying ultrasonic welding followed by a step of cooling, in the containers welded without preheating of the bottom part. Any suitable heat source, such as: electrical, optical, etc., can be used

In some embodiments of the manufacturing method presented herein, the unexpected experimental result of the preheating step has been the undefaced polymer container with a flat and straightened or otherwise unwarped internal partition in the top part of the container, after ultrasonic welding, colling and retrieval.

This is as opposed to the common manufacturing processes that are performed without preheating, which resulted in a warped and non-straight or buckled internal partition in the top part of the container, sometime after the ultrasonic welding, colling and retrieval.

In accordance with some aspects and embodiments of the invention, there is provided a process of manufacturing containers from polymeric materials with unwarped internal partition including: premanufacturing a bottom part of a container from a polymeric material, in which the bottom part embodying essentially a platform shape; premanufacturing a top part of the container from a polymeric material, in which the top part including: a bottom plate of the top part, configured to match the bottom part, in which a superior surface of the bottom part is engageable to an inferior surface of the bottom plate of the top part; a plurality of surrounding sidewalls, in which an interior profile of the surrounding sidewalls is configured to match an exterior profile of the bottom part; at least one interior partition, configured for dividing an interior volume of the container into at least two distinct compartments, in which the interior partition extends essentially an entire distance in-between two opposing sidewalls, of the plurality of surrounding sidewalls, in which the interior partition forms an integral monolithic part of the plurality of surrounding sidewalls; applying a preheating treatment to the bottom part; appending the top part of the container to the first bottom part following the step of applying the preheating; welding the interior profile of the surrounding sidewalls of the top part with the exterior profile of the bottom part, thereby forming a welded complex of the container; cooling down the welded complex of the container, thereby facilitating stretching of the at least one interior partition and forming of a container with an unwarped internal partition.

In some embodiments, the manufacturing process further includes, after the premanufacturing of the bottom part and the top part, transferring the bottom part and the top part by at least one transportation mechanism selected from a group of: a conveyor, robotic arm, mobile robot, railed vehicle, aerial vehicle and marine vessel.

In some embodiments, the interior profile of the surrounding sidewalls is configured to overlap with the exterior profile of the bottom part.

In some embodiments, the welding includes an ultrasonic welding.

In accordance with some aspects and embodiments of the invention, there is provided a container with unwarped internal partition, manufactured from polymeric materials, the container includes: a bottom part of the container, in which the bottom part embodying essentially a platform shape; a top part of the container, in which the top part including: a bottom plate of the top part, configured to match the bottom part, in which a superior surface of the bottom part is engageable to an inferior surface of the bottom plate of the top part; a plurality of surrounding sidewalls, in which an interior profile of the surrounding sidewalls is configured to match an exterior profile of the bottom part; at least one interior partition, configured for dividing an interior volume of the container into at least two distinct compartments, in which the interior partition extends essentially an entire distance in-between two opposing sidewalls, of the plurality of surrounding sidewalls, in which the interior partition forms an integral monolithic part of the plurality of surrounding sidewalls; the container is being manufactured by performing the steps of: premanufacturing the bottom part from a polymeric material; premanufacturing the top part from a polymeric material; applying a preheating treatment to the bottom part; appending the top part of the container to the first bottom part following the step of applying the preheating; welding the interior profile of the surrounding sidewalls of the top part with the exterior profile of the bottom part, thereby forming a welded complex of the container; cooling down the welded complex of the container, thereby facilitating stretching of the at least one interior partition and forming of a container with an unwarped internal partition.

In some embodiments, in which the container includes a plurality of interior monocytic partitions.

In some embodiments, in which the container is of at least one configuration selected from the group consisting of: an open top configuration, closed configuration, open side configuration and open front configuration.

In some embodiments, in which the polymeric materials of the bottom part and the top part are a thermoplastic resin.

In some embodiments, in which the container includes a plurality of interior monocytic partitions, in which at least one partition of the plurality of the monocytic partitions is disposed essentially orthogonally to at least one another partition of the plurality of the monocytic partitions.

In some embodiments, in which the bottom part includes at least one structural element configured for manipulating and/or conveying the container, in which the at least one structural element is selected from the group consisting of: a notch, groove, recess, ridge, wheels.

In some embodiments, in which at least one the surrounding sidewalls includes at least one element selected from the group of: a handle, a tab-shaped handhole, a preparation for a handhole.

In some embodiments, in which the surrounding sidewalls comprise peripheral rim.

In some embodiments, in which a superior surface of the bottom part comprise a structured shape configured for engaging to inferior surface of an inferior surface of the bottom plate of the top part.

In some embodiments, in which the bottom part includes at least one structural element selected from the group consisting of: a plurality of reinforcement ribs, plurality of circular ridges and plurality of polygonal ridges.

In some embodiments, in which a superior surface of the bottom plate of the top part includes at least one structural element configured for affixing articles in the container.

In some embodiments, in which the container further includes a lid, in which the lid is attachable to the surrounding sidewalls by at least one mechanism selected from the group of: an interlocking mechanism, snap-on mechanism and hinged mechanism. A system for manufacturing containers with unwarped internal partition from polymeric materials includes: at least one first premanufacturing subsystem, including at least one mold embodying an inverted shape of a bottom part of the container; at least one second premanufacturing subsystem, including at least one member selected from the group consisting of: a mold embodying an inverted shape of a top part of the container and an extruder nozzle including a profile of a shape the top part of the container; in which the at least one member further includes: a void volume of an inverted shape of surrounding sidewalls, in which an interior profile of the surrounding sidewalls essentially matching an exterior profile of the bottom plate; a void volume of an inverted shape of at least one monolithic interior partition, configured for dividing an interior volume of the container into at least two distinct compartments; in which the interior partition extends essentially an entire distance in-between two opposing sidewalls, of the surrounding sidewalls; in which the void volume of the inverted shape of the at least one interior partition forms a continuum with the void volume of the inverted shape of the surrounding sidewalls; at least one preheater, configured to apply preheating treatment to the bottom part; an appending mechanism configured appending the top part of the container to a preheated bottom part; a welding machine, configured for fusing a bottom edge of the top part with a top edge of the bottom part, thereby forming a welded complex of the container; a cooler configured for cooling down the welded complex of the container, thereby stretching the at least one interior partition and facilitating forming of a container with an unwarped internal partition.

### Technical Problem

The technical problem underlying the present invention is the occurrence of warpage in an interior partition of a two-part container, including a premanufactured top part with a monolithic interior partition and a premanufactured bottom plate part, manufactured from polymeric materials and connected by a means of welding the top part onto the bottom part.

A characteristic of products manufactured from plastic polymers is that the internal stress often causes the buckling and/or deformation of the plastic part, otherwise known as the warpage of the manufactured plastic products. The warpage adversely affects the product in terms of quality and uniformity of the polymeric parts, particularly of two-part containers, including a premanufactured top part with a monolithic interior partition.

Therefore a solution for the technical problem of manufacturing two-part containers from polymeric materials, from a premanufactured top part with a monolithic interior partition and a premanufactured bottom plate part, with unwarped internal partition of the top part, is called for.

It is an object of the present invention to provide a process of manufacturing containers by welding a polymeric top part to a bottom part. The manufacturing method allows to overcome technical problem of warpage of the interior partition of the top polymeric part, after the colling step of the welded complex of the container.

### Solution to Problem

The present invention overcomes the aforementioned problem by providing a method of manufacturing containers from polymeric materials with unwarped internal partition. According to some aspects and embodiments of the present invention, a method of manufacturing containers from polymeric materials with unwarped internal partition comprises the steps of: premanufacturing a bottom plate-like part, premanufacturing a top part, including sidewalls with at least one interior monolithic partition extending in-between, applying a preheating procedure to the bottom part, appending the top part to the bottom part, preforming ultrasonic welding between the top part to the bottom part and cooling down the container.

One of the characteristics of the manufacturing method according to some aspects and embodiments of the present invention is the preheating of the bottom part, which facilitates the even and unwarped shape of the internal partition part of the top part. In other words, some aspects and embodiments of the present invention are characterized in that the preheated bottom part is used prior to the welding, to achieve a straightened out internal partition of the part of the two-part container.

In some embodiments of the manufacturing process presented herein, a heat source was used for preheating the bottom part prior to the step of ultrasonic welding. The step of preheating the bottom part has proved to prevent warpage of the in internal monolithic partition, which has occurred after applying ultrasonic welding followed by a step of cooling, in the containers welded without preheating of the bottom part. Any suitable heat source, such as: electrical, optical, etc., can be used

### Advantageous Effects of Invention

The advantageous effect of embodiments of the present invention is the preventing of warpage in the internal monolithic partition of the two-part container, manufactured from polymeric materials, by a means of welding the top part to the bottom part. The aforementioned advantageous effect is attributed to the step of preheating the bottom part, which reduces the possible internal stress of the internal monolithic partition, which occurs sometime after the ultrasonic welding and cooling down.

In some embodiments of the manufacturing method presented herein, the unexpected experimental effect of the preheating step has been the undefaced polymer container with a flat and straightened or otherwise unwarped internal partition in the top part of the container, after ultrasonic welding, colling and retrieval. This is as opposed to the common manufacturing processes that are performed without preheating, which resulted in a warped and non-straight or buckled internal partition in the top part of the container, sometime after the ultrasonic welding, colling and retrieval.

### DEFINITIONS

The terms preheating treatment as used herein includes not only a direct and/or indirect individual heat treatment, in which the bottom plate of the container is directly heated by applying thermal energy thereto but also an indirect heat treatment, in which the bottom plate is heated indirectly and/or remains a residual heat, after the injection molding thereof.

The term exterior profile as used herein refers inter alia to the bottom plate of the container. The exterior profile of the bottom plate is defined as a peripheral lateral surface of the bottom plate and/or peripheral edge on the top or bottom edge surrounding the bottom plate.

The term warpage as used herein relates to a physical deformation or distortion or twist or curvature in one or more directions of the structure of a molded internal partition in the top polymeric part. The internal partition in the top polymeric part loses its straight-line configuration as the result of warpage.

The term warped as used herein refers to a state in which a polymeric part surface is in a non-flat and/or non-straight and/or non-planar shape and/or non-plane shape, as a result warpage occurring sometime of after applying ultrasonic welding cooling.

The term unwarped as used herein is refers to a flattened and/or straightened and/or planar state of the surface of the internal partition.

The term modular, as referred to herein, should be construed as a stand-alone unit. The term modular *inter alia* means a standardized unit that may be conveniently installed or deployed without significant impact to the environment. The term modular, however, doesn't necessarily means providing for ease of interchange or replacement. The term modular is optionally satisfied by providing for ease of at least onetime deployment or installation.

The term readily connectable, as referred to herein, should be construed as a standardized unit that may be conveniently connected to other components of the system. The term readily connectable, however, doesn't necessarily means readily disconnectable or removable. The term readily connectable is optionally satisfied by providing for ease of at least onetime connection or coupling.

The terms matching and/or matchable as referred to herein is to be construed as a cross-sectional area and/or shape of a component is equal or essentially similar to a cross-sectional area and/or shape of another component. It should be acknowledged that the component need only to be similar in the cross-sectional areas and/or shapes, to satisfy the term matching/matchable, so long as the cross-sectional areas can be mated or the combination will fit into and/or occupy essentially the same lateral space.

The term structured as referred to herein is to be construed as including any geometrical shape, exceeding in complexity a plain linear shape or a shape embodying simple cylindrical, elliptical or polygonal contour or profile. A more complex shape, a plain linear shape or a shape embodying simple cylindrical, elliptical or polygonal contour or profile, constitutes an example of structured geometry.

The terms firm rigid or stiff, as referred to herein, are to be construed as having rigidity modulus value, otherwise referred to as the shear modulus, of 4800 MPa or more. Materials are considered to be firm rigid, or stiff but not tensile, when such materials are incapable of being efficiently elastically flexed or bent. Stiff materials, such as steel, are defined as having rigidity modulus value well exceeding 4800 MPa.

The terms pliable or pliant, as referred to herein, are to be construed as having high tensile strength and capable of being efficiently elastically flexed or bent but not being resilient and incapable of being efficiently stretched or expanded. The term tensile or tensile strength, as referred to herein, is to be construed inter alia as a shortcut of the known term ultimate tensile strength, frequently represented acronym as UTS, meaning an intensive property of a material or structure to withstand loads tending to elongate, namely to resist tension, defined as the maximum stress that a material can withstand while been stretched or pulled before sustaining breaking, substantial deformation and/or necking before fracture, such as nylon, relating to essentially non-ductile materials, having UTS value ranging between about 600 and 1000 MPa or more, but not including rigid, firm or stiff materials.

By operationally connected and/or operably coupled, as used herein, is meant connected in a specific way (e.g., in a manner allowing water to move and/or electric power to be transmitted) that allows the disclosed system and its various components to operate effectively in the manner described herein.

In the specification or claims herein, any term signifying an action or operation, such as: a verb, whether in base form or any tense, gerund or present/past participle, is not to be construed as necessarily to be actually performed but rather in a constructive manner, namely as to be performed merely optionally or potentially.

The term substantially as used herein is a broad term, and is to be given its ordinary and customary meaning to a person of ordinary skill in the art (and is not to be limited to a special or customized meaning), and refers without limitation to being largely but not necessarily entirely of that quantity or quality which is specified.

The term essentially means that the composition, method or structure may include additional ingredients, stages and or parts, but only if the additional ingredients, the stages and/or the parts do not materially alter the basic and new characteristics of the composition, method or structure claimed.

As used herein, the term essentially changes a specific meaning, meaning an interval of plus or minus ten percent (± 10%). For any embodiments disclosed herein, any disclosure of a particular value, in some alternative embodiments, is to be understood as disclosing an interval approximately or about equal to that particular value (i.e., ± 10%).

As used herein, the terms about or approximately modify a particular value, by referring to a range equal to the particular value, plus or minus twenty percent (+/-20%). For any of the embodiments, disclosed herein, any disclosure of a particular value, can, in various alternate embodiments, also be understood as a disclosure of a range equal to about that particular value (i.e. +/-20%).

As used herein, the term or is an inclusive or operator, equivalent to the term and/or, unless the context clearly dictates otherwise; whereas the term and as used herein is also the alternative operator equivalent to the term and/or, unless the context clearly dictates otherwise.

It should be understood, however, that neither the briefly synopsized summary nor particular definitions hereinabove are not to limit interpretation of the invention to the specific forms and examples but rather on the contrary are to cover all modifications, equivalents and alternatives falling within the scope of the invention.

### DESCRIPTION OF THE DRAWINGS

The present invention will be understood and appreciated more comprehensively from the following detailed description taken in conjunction with the appended drawings in which:
**FIG 1A** is a perspective view of an embodiment of the components of the container, in an exploded conformation;
**FIG 1B** is a perspective view of an embodiment of the container, in an assembled conformation;
**FIG 2A** is a top view of an embodiment of the bottom part;
**FIG 2B** is a bottom view of an embodiment of the bottom part;
**FIG 3A** is a perspective view of an embodiment of the top part of the container;
**FIG 3B** is a bottom view of an embodiment of the top part of the container;
**FIG 3C** is a top view of an embodiment of the top part of the container;
**FIG 4A** is an isometric view of another embodiment of the top part;
**FIG 4B** is a is a front view of the longitudinal sidewall of another embodiment of the top part;
**FIG 5A** **is** an isometric view of yet another embodiment of the top part;
**FIG 5B** is a left-side view of the flanking sidewall of yet another embodiment of the top part;
**FIG 6A** an isometric view of still another embodiment of the top part;
**FIG 6B** an isometric view illustrating still another top embodiment of the part being appended to the bottom part;
**FIG 7** is a flowchart diagram illustrating an embodiment of the process for manufacturing containers from polymeric materials with unwarped internal partition;
**FIG 8** is a schematic block diagram of an embodiment of the system for manufacturing containers with unwarped internal partition from polymeric materials.

While the invention is susceptible to various modifications and alternative forms, specific embodiments thereof have been shown merely by way of example in the drawings. The drawings are not necessarily complete and components are not essentially to scale; emphasis instead being placed upon clearly illustrating the principles underlying the present invention.

### DETAILED DISCLOSURE OF EMBODIMENTS

Illustrative embodiments of the invention are described below. In the interest of clarity, not all features of actual implementation are described in this specification. It should be appreciated that various features or elements described in the context of some embodiment may be interchangeable with features or elements of any other embodiment described in the specification. Moreover, it will be appreciated that for the development of any actual embodiment, numerous implementation-specific decisions must be made to achieve the developers' specific goals, such as compliance with technology- or business-related constraints, which may vary from one implementation to another, and the effort of such a development might be complex and time-consuming, but would nevertheless be a routine undertaking for those of ordinary skill in the art having the benefit of this disclosure.

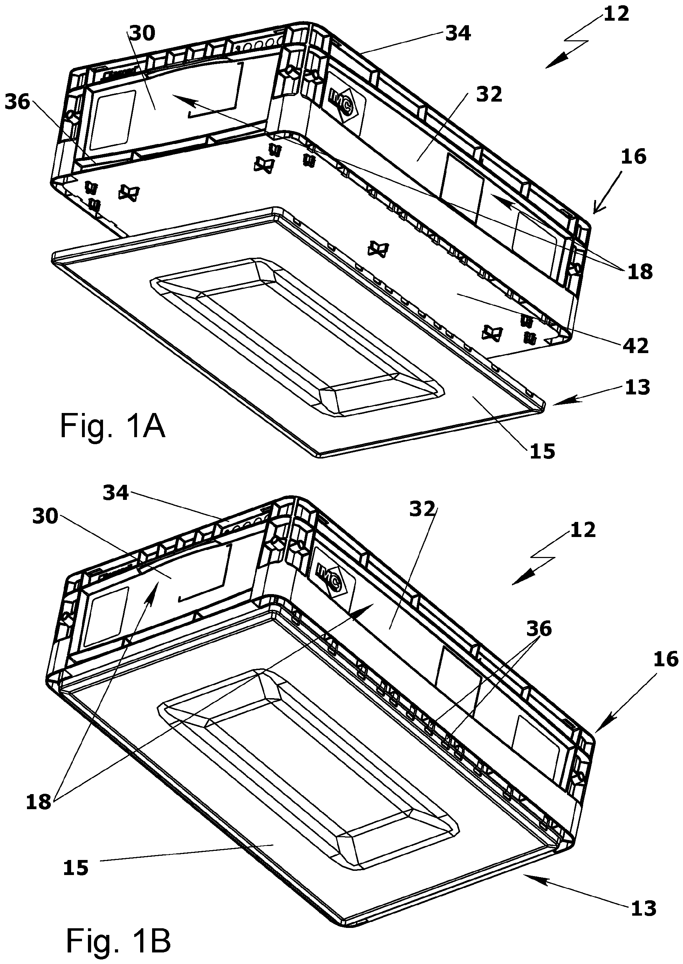

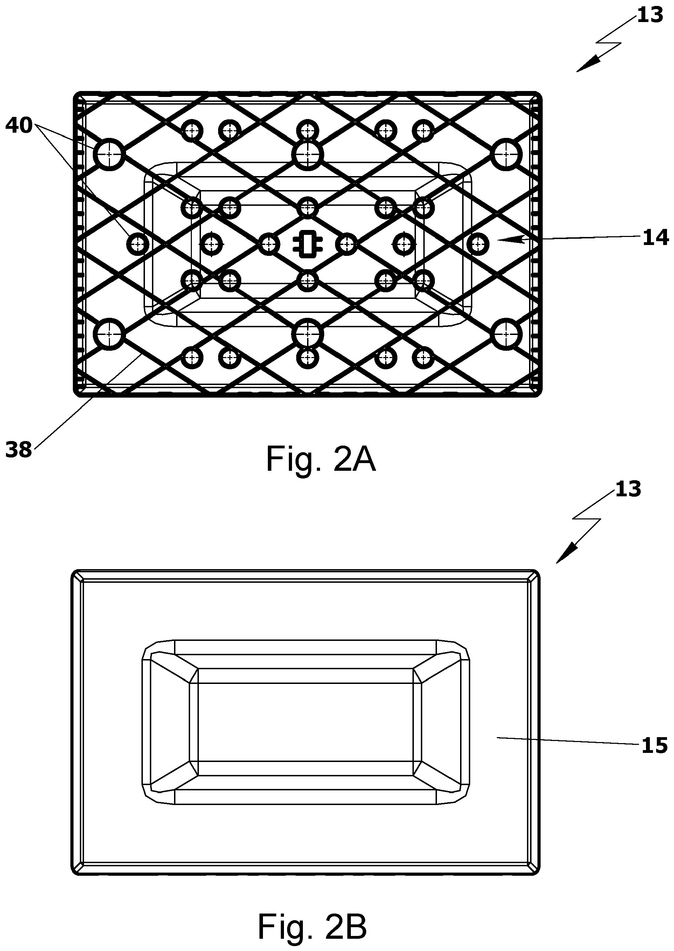

In accordance with some aspects and embodiments of the present invention, reference is now made to **FIG 1A** and **1B****,** showing container **12,** as well as to **FIG 2A** and **2B****,** showing bottom part 13. Container 12 is typically configured for transporting fluidic and/or solid products. In some examples, container **12** is configurable in various sizes and/or volumes. In other examples, container **12** is portioned into different interior compartments. In some embodiments, container **12** is open from the top, namely with or without top plate or lid, whereas in other embodiments, container **12** is open from at least one sidewall of the container.

In some embodiments, container **12** comprises bottom part **13,** shown in **FIG 2A** and **2B****.** Bottom part **13** is configured for bearing the weight of articles in container **12.** In some examples, bottom part **13** comprises at least one polymeric material, such as polypropylene, polyethylene and particularly high density polyethylene, polysulfone, polyethersulfone, polyetherketone, polyetheretherketone, aromatic polyamide, aromatic polyester, aromatic polycarbonate, polyetherimide, polyarylene oxide, thermoplastic polyimide, polyamide, polyamideimide, or a combination of these polymeric materials.

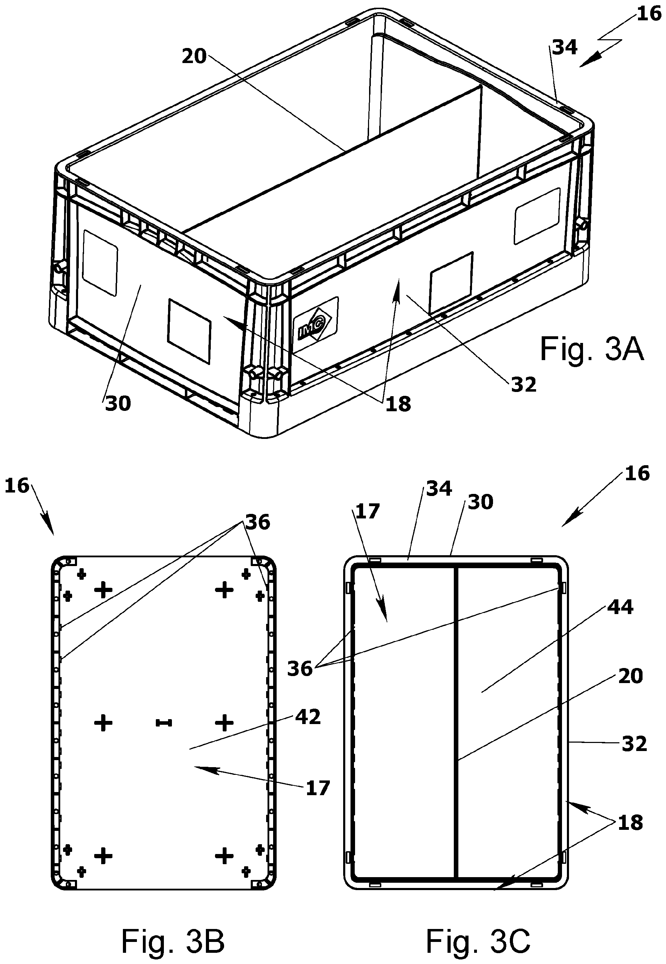

In some embodiments, container **12** comprises top part **16.** In some embodiments top part **16** embodies different sizes and/or heights, for instance as shown in **FIG 3A** to **3C****.** Top part **16** is configured for confining the articles in container **12** to the exterior profile of bottom part **13.** In some examples, top part **16** comprises at least one polymeric material, such as polypropylene, polyethylene and particularly high density polyethylene, polysulfone, polyethersulfone, polyetherketone, polyetheretherketone, aromatic polyamide, aromatic polyester, aromatic polycarbonate, polyetherimide, polyarylene oxide, thermoplastic polyimide, polyamide, polyamideimide, or a combination of these polymeric materials.09-5se

In some examples, top part **16** comprises at least one polymeric material that is different than the polymeric material of bottom part **13.** Whereas in other examples, top part **16** comprises at least one polymeric material that is essentially similar or identical to the polymeric material of bottom part **13.**

In some embodiments, top part **16** optionally comprises bottom plate **17,** shown in **FIG 3A** to **3C****.** In some examples, bottom plate **17** is configured for providing additional support to container **12** to bear high weight articles. In some examples, bottom plate **17** is configure to match bottom part **13** of container **12.** In some examples, bottom plate **17** is configured to form a continuum with at least one sidewall of container **12.**

In some embodiments, top part **16** comprises plurality of surrounding sidewalls **18,** shown in **FIG 3A** to **3C**. In some embodiments, the exterior profile of surrounding sidewalls **18** is configured to match the exterior profile of bottom part **13.** In some embodiments, the interior profile of surrounding sidewalls **18** is configured to match the exterior profile of bottom part **13.**

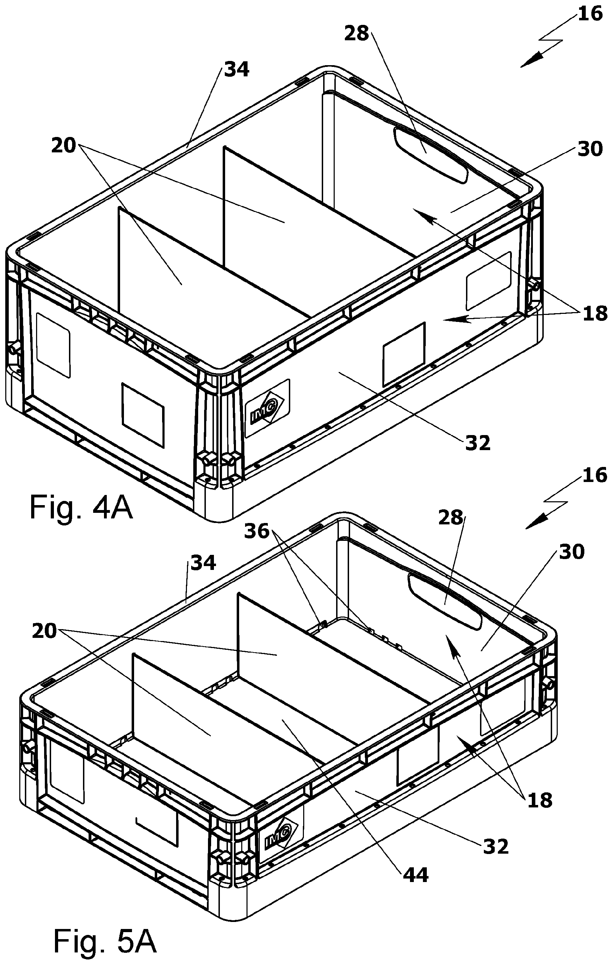

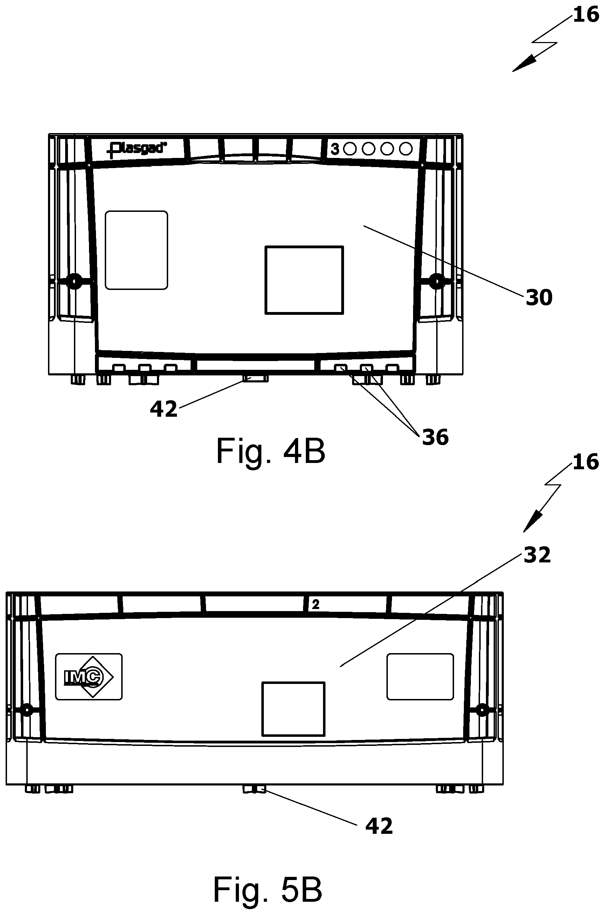

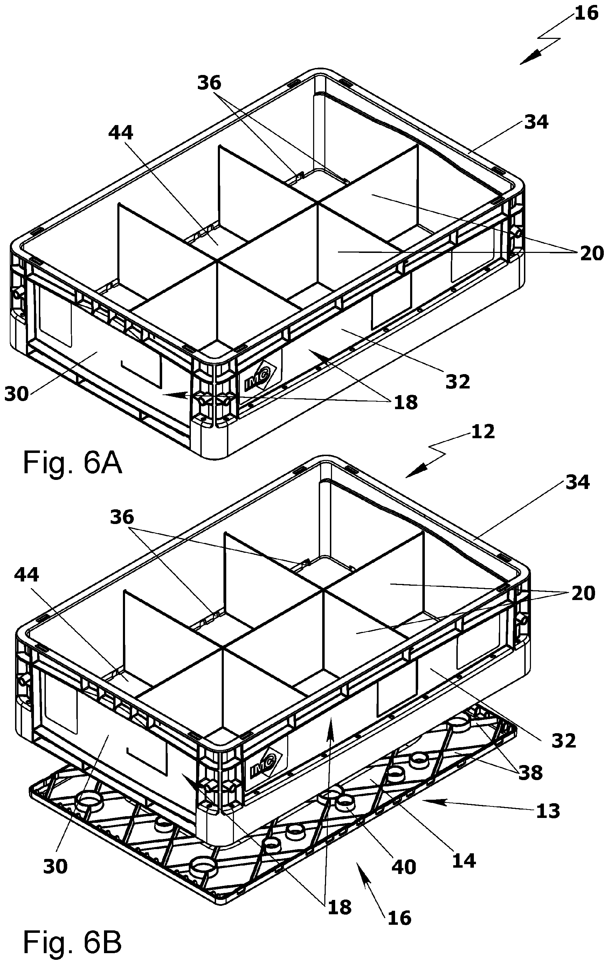

In some embodiments, surrounding sidewalls **18** comprise solid or ventilated sidewalls or a combination thereof. In some embodiments, surrounding sidewalls **18** are configurable in various heights such as shown in **FIG 5A** and **5B** as well as in **FIG 6A** and **6B****.** In some embodiments, surrounding sidewalls **18** comprise pair of flanking sidewalls **30** and pair of longitudinal sidewalls **32.**

In some embodiments, top part **16,** shown in **FIG 3A** to **3C****,** comprises at least one interior partition **20.** Interior partition **20** is configured for dividing the interior volume of container **12** into at least two distinct compartments as shown in **FIG 4A** to **6B****.** Interior partition **20** extends essentially an entire distance in-between two opposing sidewalls of the plurality of surrounding sidewalls **18.** In some embodiments, interior partition **20** is disposed widthwise, namely extending in-between pair of longitudinal sidewalls **32** as shown in **FIG 5A** to **6B****,** whereas in other embodiments, interior partition **20** is disposed lengthwise, namely in-between pair of flanking sidewalls **30,** as shown in **FIG 6A** and **6B****.** Interior partition **20** forms an integral part of plurality of surrounding sidewalls **18.** Interior partition **20** is preferably monolithic with plurality of surrounding sidewalls **18.**

In some examples, container **12** comprises a lid. The lid is configured for protecting, securing and/or sealing products inside container **12.** The lid is configured for covering the open upper end of container **12.** In some embodiments, the lid is configured for being removed easily. In another embodiments, the lid is configured for being tightly secured. In some examples, the lid is attachable to surrounding sidewalls **18** by interlocking, snap-on or hinged mechanism. In some examples, container **12** is configured for closing and/or stacking with the lid on top. In some examples, the lid is a folding split lid. In another embodiment, container **12** is configured for a single use or for multiple uses.

In some examples, bottom part **13** of container **12** comprises wheels. The wheels are configured for facilitating the transportation of container **12.** In some embodiments, the wheels comprise at least one material, such as polymer or metal or a combination of these. In some examples, the wheels are removably attachable to bottom part **13.**

In some embodiments, at least one surrounding sidewall **18,** such as flanking sidewalls **30** and/or longitudinal sidewalls **32,** comprise at least one of: a handle, tab-shaped handhole **28,** a preparation for a handhole and a combination thereof. The handle and/or handhole **28,** as shown in **FIG 4A** and **5A** are configured for manually carrying and/or manipulating container **12.** In some examples, the handle extends outwardly from surrounding sidewall **18,** namely from at least one of flanking sidewalls **30** and/or longitudinal sidewalls **32.** In some embodiments, at least one handle or handhole **28** is located on flanking sidewalls **30.** In other embodiments, at least one handle or handhole **28** is located on longitudinal sidewalls **32.**

In some embodiments, surrounding sidewalls **18** comprise peripheral rim **34,** as shown in **FIG 4A** and **5A****.** In some embodiments, rim **34** is configured for at least: stacking of container **12** on top of another of container **12,** positioning of the lid on top of container **12,** suspending of container **12** by disposing rim **34** onto rails (not shown) or a combination thereof. Rim **34** is preferably configured for manipulating container **12** on a robotic railway and/or conveyor, as well as for conveying and/or positioning container **12** inside an automated warehouse.

In some embodiments, surrounding sidewalls **18** comprise at least one ventilation hole **36.** Ventilation hole **36** is configured for air circulation and odor removal. In some embodiments, ventilation hole **36** is typically located in the bottom edge of surrounding sidewalls **18** as shown in **FIG 1B****.** In some embodiments, ventilation hole **36** is a round and/or polygonal hole or a combination of both.

In some example, bottom part **13** comprises structured superior surface **14,** as shown in **FIG 2A****.** Superior surface **14** of bottom part **13** is configured for engaging and aligning with bottom plate **17** of top part **16,** and for strengthening of container **12.** In some embodiments, superior surface **14** of bottom part **13** comprises a plurality of reinforced ribs **38** of circular and/or polygonal shapes **40** as shown in **FIG 2A****.** In some embodiments, bottom part **13** comprises structured inferior surface **15,** as shown in **FIG 2B****.** In some embodiments, inferior surface **15** of bottom plate **13** is configured for providing a firm grip of container **12** on a ground.

In some embodiments, bottom plate 17 of top part 16 comprises structured inferior surface **42,** as shown in **FIG 3B****.** Inferior surface **42** of bottom plate **17** is configured for engaging and/or aligning with superior surface **14** of bottom part **13,** as shown in **FIG 2A****.** In some embodiment, inferior surface **42** of bottom plate **17** comprises at least one polygonal and/or circular and/or cross shaped structural protrusion or a combination thereof, which is fitted into circular and/or polygonal shapes **40** of superior surface **14** of bottom part **13,** as shown in **FIG 2A****.**

In some embodiments, bottom plate **17** comprises superior surface **44,** as shown in **FIG 3C****.** Superior surface **44** of bottom plate **17** is configured to affix or otherwise contact with articles in container **12.** For example, superior surface **44** of bottom plate **17** optionally includes a plain, structured, textured and/or furrowed surface.

In another embodiment, top part **16** comprises surrounding side walls **18** and at least one interior partition **20,** without bottom plate **17.** In such embodiments, top part **16** is configured for matching with exterior profile of bottom part **13.** In such embodiments, superior surface **14** of bottom part **13** is configured to affix or otherwise contact articles in container **12.** For example, superior surface **14** of bottom part **13** optionally includes a plain, structured, textured and/or furrowed surface.

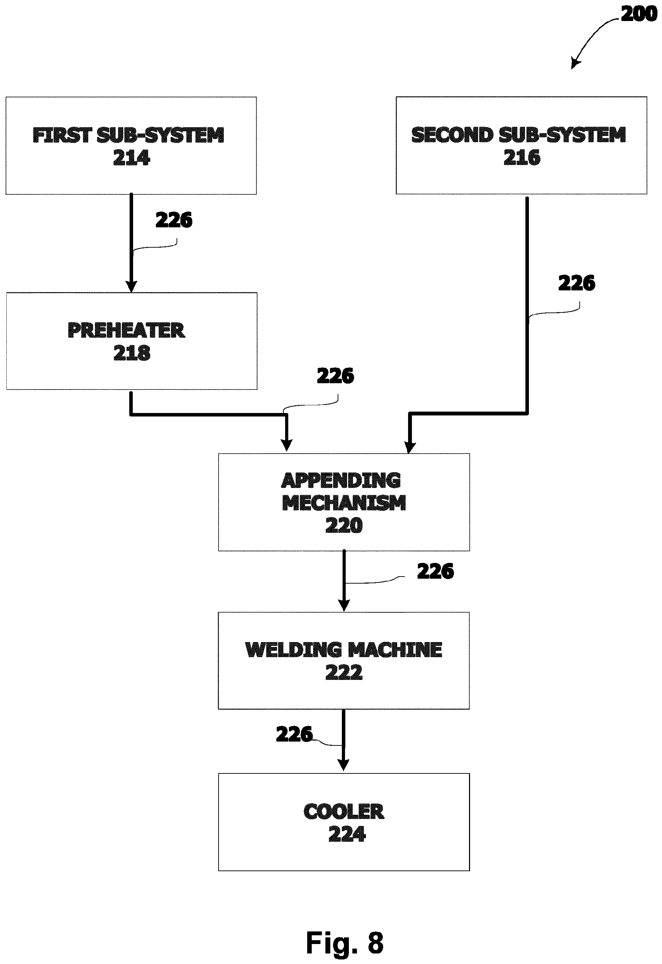

In accordance with some embodiments of the present invention, reference is now made to **FIG 8****,** showing a schematic block diagram of system **200** for manufacturing containers with unwarped internal partition from polymeric materials. In some embodiments, system **200** for manufacturing containers with unwarped internal partition of the embodiment of **FIG 8** illustrates various features that may be interchangeable with elements of any other embodiment described in the specification.

In some embodiments, system **200** includes at least one first premanufacturing subsystem **214.** First premanufacturing subsystem **214** is configured for producing a bottom plate part of the container, such as bottom part **13** of container **12** shown in **FIG 2A****.**

In some examples, first premanufacturing subsystem **214** comprises at least one of the plastic processing machines for producing polymeric products, in a non-limiting manner including: an extruder, injection molding machine, thermo-forming machine, vacuum-forming machine, pressure-forming machine or any combination of these processing machines. In some embodiments, first premanufacturing subsystem **214** comprises an extruder including at least one constituent selected from: a feed hopper, extruder barrel, extruder screw, extruder drive, extrusion discharge or die system, heating/cooling system and safety and control facilities.

In some embodiments, first premanufacturing subsystem **214** comprises an extruder including at least one constituent selected from: a water bath or spray chamber to cool the extruded shape, vacuum sizing tank to maintain wall thickness and sizing of the product as it passes through the machine, cleated belt pullers configured to apply smooth tension on the product and keep it moving in pace with the extruder and an automatic cutting or sawing unit to create the final product length.

In some embodiments, first premanufacturing subsystem **214** comprises an injection molding machine, configured for making plastic parts using two-part molds. In such embodiments, when the two-part mold is closed, a melted plastic resin is injected into individual parts of the mold. In some embodiments, an injection molding machine includes injection and clamping units. In some examples, an injection unit comprises at least one constituent selected from: hopper, screw, heaters, drive and gearing unit, barrel and nozzle. In some examples, a clamping unit comprises at least one constituent selected from: stationary and movable platens, molds, tie rods, clamping and hydraulic cylinders.

In some embodiments, first premanufacturing subsystem **214** comprises a thermoforming machine. In some examples, a thermoforming machine comprises at least one constituent selected from: a heater, molds, pick-up platform, heating platen assembly, feeder, cutting device. In some examples, first premanufacturing subsystem **214** comprises a vacuum-forming machine including at least one constituent selected from: a heater, toggle clamp, molds, platen, lift handle, lift linkage, vacuum pump, fans and/or cool mist and trimer. In some embodiments, a pressure forming machine includes a group consisting of: heater, pressure box, toggle clamp, molds, platen, lift handle, lift linkage, vacuum pump, fans and/or cool mist and trim. In some embodiments, the molds, extruder die and nozzles is used by at least one of the plastic processing machines embody an inverted shape of a bottom plate-like part of a container.

In some embodiments, system **200** includes at least one second premanufacturing subsystem **216.** Second premanufacturing subsystem **216** is configured for producing the top part of the container. In some example, second premanufacturing subsystem **216** comprises at least one member selected from the group consisting of: a mold of a top part of the container and an extruder nozzle of the top part of the container. In some examples, second premanufacturing subsystem **216** is at least one of the plastic processing machines for producing polymeric products such as an extruder, an injection molding machine, thermo forming, vacuum-forming or pressure-forming machine or a combination of these processing machines. In some examples, the molds, extruder die and nozzles is used by at least one of the plastic processing machines embody an inverted shape of at least one of the top part member of container, such as surrounding sidewalls, with the monolithic interior partition.

In some embodiments, the bottom and top parts, manufactured by subsystems **214** and **216** are transported by conveying mechanism **226.** In some embodiments, bottom and top parts are manufactured in a co-manufacturing facility. In some examples, conveying mechanism **226** includes at least one transporting mechanism, such as conveyor, robotic arm, mobile robots, vehicles, or a combination of these. In some embodiments, bottom and top parts are manufactured in different manufacturing facilities. In some examples, conveying mechanism **226** from one facility to another includes at least one external transport forms such as trucks, trains, airplanes, ships, cars or a combination thereof.

In some embodiments, system **200** includes preheater **218.** Preheater **218** is configured for applying preheating treatment to bottom part, to a temperature ranging from 40 to 240 degrees Celsius for the duration ranging between 20 seconds to several minutes. In some examples, preheater **218** comprises at least one of the typical heating mechanisms such as electric, ceramic infrared heaters, gas burner, gas water heater or a combination thereof.

In some embodiments, system **200** includes appending mechanism **220.** Appending mechanism **220** configured for appending top part to preheated bottom part of the container. In some examples, appending mechanism **220** comprises at least one manipulator dedicated for the bottom part and/or at least one manipulator dedicated for the top part. In some examples, appending mechanism **220** includes robotic arms, conveyor, etc.

In some embodiments, system **200** includes welding machine **222.** Welding machine **222** is configured for fusing the interior edge at the bottom of the top part with an exterior edge at the top of the bottom part, thereby forming a welded complex of the container. In some embodiments, welding machine **222** implements at least one welding method selected from the group consisting of: ultrasonic welding, spin welding, vibration welding, hot plate welding, hot gas welding, friction welding, frequency welding, infrared welding, laser welding or a combination thereof.

In some embodiments, system **200** includes cooler **224.** Cooler **224** is configured to solidify the newly formed bonds of welded complex of the container, thereby stretching at least one interior partition and facilitating the formation of an unwarped internal partition. In some examples, cooler **224** implements at least one cooling down process selected from the group consisting of: air-cooling, water-cooling, room temperature circulation or a combination thereof.

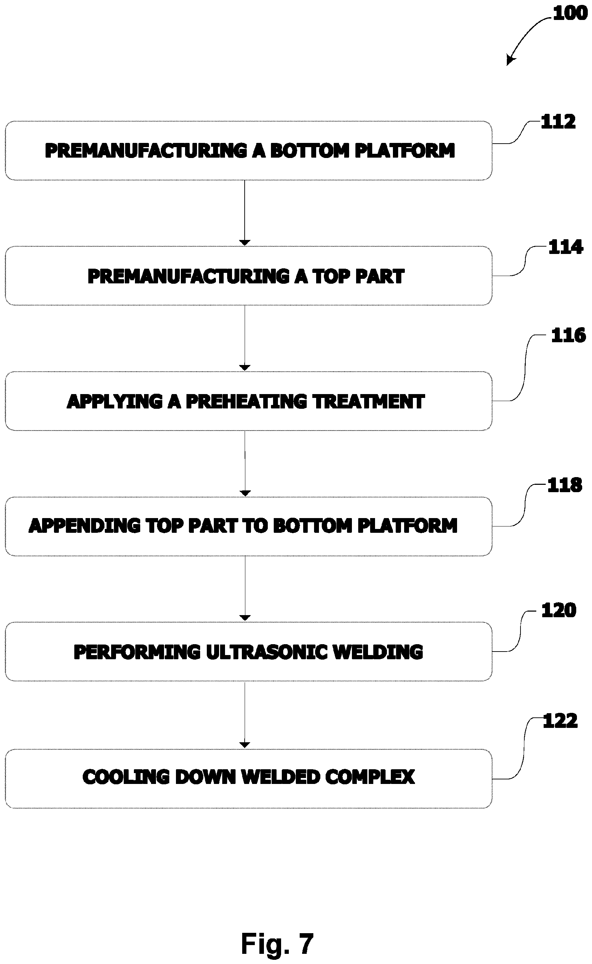

In accordance with some aspects of the present invention, reference is now made to **FIG 7****,** showing high-level flowchart **100** of an exemplary process of manufacturing containers from polymeric materials with unwarped internal partition. In some embodiments, process **100** of manufacturing containers with unwarped internal partition of the embodiment of **FIG 7** illustrates various features that may be interchangeable with elements of any other embodiment described in the specification.

In some embodiments, a process of manufacturing containers with unwarped internal partition of flowchart **100** commences at step **112,** of premanufacturing a first subpart, typically the bottom plate, such as bottom part **13** of container **12** shown in **FIG 2A****.** In some examples, step **112,** of premanufacturing a first subpart, comprises injection molding. Exemplary injection molding of step **112** is performed by a first premanufacturing subsystem, such as first premanufacturing subsystem **214** of system **200** shown in **FIG 8****.**

In some examples step **112,** of premanufacturing a first subpart, comprises melting plastic resin, by heating the resin to a predetermined temperature, applying pressure to the melted plastic resin and then injecting the melted plastic into at least one mold embodying an inverted shape of a bottom part of the container. In some embodiments, step **112,** of premanufacturing a first subpart, utilizes recycled resin pellets from a waste plastic recycling machine.

In some embodiments, a process of manufacturing containers with unwarped internal partition of flowchart **100** comprises step **114,** of premanufacturing a second subpart, typically the top part, such as top part **16,** with bottom plate **17,** surrounding sidewalls **18** and at least one interior partition **20** of container **12** shown in **FIG 3A****.** In some examples, step **114,** of premanufacturing a second subpart, comprises injection molding. Exemplary injection molding of step **114** is performed by a second premanufacturing subsystem, such as second premanufacturing subsystem **216** of system **200** shown in **FIG 8****.**

In some examples step **114,** of premanufacturing a second subpart, comprises melting plastic resin, by heating the resin to a predetermined temperature, applying pressure to the melted plastic resin and then injecting the melted plastic into at least one mold embodying an inverted shape of a top part of the container. In some embodiments, step **114,** of premanufacturing a second subpart, utilizes recycled resin pellets from a waste plastic recycling machine.

In some embodiments, a process of manufacturing containers with unwarped internal partition of flowchart **100** comprises step **116,** of applying a preheating treatment to the bottom part. In some examples, step **116,** of applying a preheating treatment to bottom part, comprises heating by a heater, such as electric heater **218** of system **200** shown in **FIG 8****.** In some examples, step **116,** of applying a preheating treatment to the bottom part, comprises transporting the bottom parts and the top parts, preheating of the bottom parts, by elevating temperature to 40 to 240 degrees Celsius and applying heating treatment to partially or entirely bottom part from 20 seconds to several minutes.

In some embodiments, a process of manufacturing containers with unwarped internal partition of flowchart **100** comprises step **118,** of appending the top part of container to the bottom part following step **116** of applying preheating. In some examples, step **118,** of appending the top part of container to the bottom plate, is performed by an appending machine, such as robotic arm **220** shown in **FIG 8****.** In some examples step **118,** of appending the top part of container to the bottom plate, comprises loading bottom part and top part on the appending machine.

In some embodiments, the process of manufacturing containers with unwarped internal partition of flowchart **100** comprises step **120,** of performing welding, between a bottom edge of top part and a top face of the bottom part. In some examples, step **120** is configured for forming a welded complex of container, as shown in **FIG 1B****.** In some examples, step **120** is performed by a welding machine, such as ultrasonic welding machine **222** shown in **FIG 8****.**

In some examples, step **120,** of performing welding, between a bottom edge of top part and a top face of bottom part, comprises assembling and fixturing the bottom edge of top part to the top face of bottom part, such as by pressuring and heating by the welding machine, at the frequency ranging between 25 to 750 Hz, welding and then holding the parts for the duration ganginh between 2 seconds to 50 seconds to allow them to fuse into the welded complex of the container.

In some embodiments, a process of flowchart **100** comprises step **122,** of cooling down the welded complex of the container. In some examples, step **122** is configured for stretching at least one interior partition and facilitating forming of an unwarped internal partition. In some examples, step **122** is performed by a cooler, such as air-cooler system **224** shown in **FIG 8****.** In some embodiments, step **122** of cooling down the welded complex of the container, comprises removing the welded complex of container from welding machine and passively applying a room temperature of about 25-35 degrees Celsius.

### WORKING EXAMPLES

### Working Example 1

First working example of the container with unwarped internal partition of the present invention is next described. The container was of the configuration shown in **FIG 3A** that included surrounding sidewalls with dimensions of 600 mm length, 400 mm width and 240 mm height. In the configuration shown in **FIG 3A****,** one interior partition was disposed lengthwise, in-between the pair of the flanking sidewalls. The typical thickness of surrounding sidewalls and of the interior partition about is 2.6 mm. The width of surrounding sidewalls including rim was 13.2 mm to 13.5 mm. The dimensions of the bottom part were 564.2 mm length, 366.2 mm width, and 13.4 mm height. The thickness of the bottom part was 2.5 mm. The bottom part and top part were composed of 98.3% PP TG50, 1% Grey dye and 0.7% UV stabilizer.

### Working Example 2

Second working example of the container with unwarped internal partition of the present exemplary embodiment is next described. The container was of the configuration shown in **FIG 4A** that included surrounding sidewalls with dimensions of 600 mm length, 400 mm width and 240 mm height. In the configuration shown in **FIG 4A****,** two interior partitions are disposed widthwise, in-between the pair of the longitudinal sidewalls. The typical thickness of surrounding sidewalls and of the interior partition was 2.6 mm. The width of surrounding sidewalls including the rim was 13.2 mm-13.5 mm. The dimensions of bottom part were 564.2 mm length, 366.2 mm width, and 13.4 mm height. The typical thickness of the bottom part was 2.5 mm. The bottom part and top part were composed of 98.3% PP TG50, 1% Grey dye and 0.7% UV stabilizer.

### Working Example 3

Third working example of the container with unwarped internal partition of the present exemplary embodiment is next described. The preheater used for applying the preheating treatment to bottom part was a heating oven available from GALATEK a.s. at Na Pláckách 647, 584 01 Ledeč nad Sázavou Czech republic. The welding machine used for fusing a bottom edge of top part with a top face of bottom part was a vibration welding machine available from CEMAS Elettra S.r.l. at Strada degli Occhini, 23. 10022 Carmagnola (TO) Italy.

The process of manufacturing the container from polymeric materials with unwarped internal partition according to the present working example included preheating to a temperature of 70 degrees Celsius for 45 seconds, preforming welding, between a bottom edge of top part and a top face of bottom part, applying vibration for of 5.6 seconds, at the frequency of 213 Hz and weld depth of 0.59 mm. Phases 1, 2 of welding were of duration of 2.5 seconds, a Kg force of 1200 Kg and an amplitude of 1.8 mm. The cooling down of the welded complex of the container was for 6 sec at a force of 1600 Kg.

### Working Example 4

Forth working example of the container with unwarped internal partition of the present exemplary embodiment is next described. The container shown in **FIG 5A** is of a configuration that includes surrounding sidewalls **18** with dimensions of 600 mm length, 400 mm width and 170 mm height. In the configuration shown in **FIG 5A****,** two interior partitions are disposed widthwise, in-between the pair of the longitudinal sidewalls. The typical thickness of surrounding sidewalls and of the interior partition was 2.6 mm. The width of surrounding sidewalls including the rim was 13.2 mm-13.5 mm. The dimensions of bottom part were 564.2 mm length, 366.2 mm width, and 13.4 mm height. The typical thickness of the bottom part was 2.5 mm. The bottom part and top part were composed of 98.3% PP TG50, 1% Grey dye and 0.7% UV stabilizer.

### Working Example 5

Fifth working example of the container with unwarped internal partition of the present exemplary embodiment is next described. The container shown in **FIG 6A** is of a configuration that includes surrounding sidewalls with dimensions of 600 mm length, 400 mm width and 170 mm height. In the configuration shown in **FIG 6A****,** two interior partitions were disposed widthwise, in-between the pair of longitudinal sidewalls and one interior partition was disposed lengthwise, in-between the pair of flanking sidewalls.

The typical thickness of surrounding sidewalls and of the interior partition was 2.6 mm. The width of surrounding sidewalls including the rim was 13.2 mm-13.5 mm. The dimensions of bottom part were 564.2 mm length, 366.2 mm width, and 13.4 mm height. The typical thickness of the bottom part was 2.5 mm. The bottom part and top part were composed of 98.3% PP TG50, 1% Grey dye and 0.7% UV stabilizer.

It will be appreciated by persons skilled in the art that the present invention is not limited by what has been particularly shown and described herein above. Rather the scope of the invention is defined by the claims which follow:

## Claims

1. A process of manufacturing containers from polymeric materials with unwarped internal partition comprises:
(a) premanufacturing a bottom part of a container from a polymeric material, wherein said bottom part embodying essentially a platform shape;
(b) premanufacturing a top part of said container from a polymeric material, wherein said top part comprising:
(I) a bottom plate of said top part, configured to match said bottom part, wherein a superior surface of said bottom part is engageable to an inferior surface of said bottom plate of said top part;
(II) a plurality of surrounding sidewalls, wherein an interior profile of said surrounding sidewalls is configured to match an exterior profile of said bottom part;
(III) at least one interior partition, configured for dividing an interior volume of said container into at least two distinct compartments, wherein said interior partition extends essentially an entire distance in-between two opposing sidewalls, of said plurality of surrounding sidewalls, wherein said interior partition forms an integral monolithic part of said plurality of surrounding sidewalls;
(c) applying a preheating treatment to said bottom part;
(d) appending said top part of said container to said bottom part following said step of applying said preheating;
(e) welding said interior profile of said surrounding sidewalls of said top part with said exterior profile of said bottom part, thereby forming a welded complex of said container;
(f) cooling down said welded complex of said container, thereby facilitating stretching of said at least one interior partition and forming of a container with an unwarped internal partition.

2. The process as in claim 1, wherein said interior profile of said surrounding sidewalls is configured to overlap with said exterior profile of said bottom part.

3. The process as in claim 1, wherein said welding comprises an ultrasonic welding.

4. A container (12) with unwarped internal partition, manufactured from polymeric materials, said container (12) comprises:
(a) a bottom part (13) of said container, wherein said bottom part (13) embodying essentially a platform shape;
(b) a top part (16) of said container (12), wherein said top part (16) comprising:
(I) a bottom plate (17) of said top part (16), configured to match said bottom part (13), wherein a superior surface (14) of said bottom part (13) is engageable to an inferior surface (42) of said bottom plate (17) of said top part (16);
(II) a plurality of surrounding sidewalls (18), wherein an interior profile of said surrounding sidewalls (18) is configured to match an exterior profile of said bottom part (13);
(III) at least one interior partition (20), configured for dividing an interior volume of said container (12) into at least two distinct compartments, wherein said interior partition (20) extends essentially an entire distance in-between two opposing sidewalls, of said plurality of surrounding sidewalls (18), wherein said interior partition (20) forms an integral monolithic part of said plurality of surrounding sidewalls (18);
said container (12) is being manufactured by performing the steps of:
(c) premanufacturing said bottom part (13) from a polymeric material;
(d) premanufacturing said top part (16) from a polymeric material;
(e) applying a preheating treatment to said bottom part (13);
(f) appending said top part (16) of said container (12) to said bottom part following said step of applying said preheating;
(g) welding said interior profile of said surrounding sidewalls (18) of said top part (16) with said exterior profile of said bottom part (13), thereby forming a welded complex of said container (12);
(h) cooling down said welded complex of said container (12), thereby facilitating stretching of said at least one interior partition (20) and forming of said container with said unwarped internal partition.

5. The container (12) as in claim 4, wherein said container (12) comprises a plurality of interior monocytic partitions.

6. The container (12) as in claim 4, wherein said container (12) is of at least one configuration selected from the group consisting of: an open top configuration, closed configuration, open side configuration and open front configuration.

7. The container (12) as in claim 4, wherein said container (12) comprises a plurality of interior monocytic partitions, wherein at least one partition of said plurality of interior monocytic partitions is disposed essentially orthogonally to at least one another partition of said plurality of interior monocytic partitions.

8. The container (12) as in claim 4, wherein said surrounding sidewalls (18) comprise a peripheral rim (34).

9. The container (12) as in claim 4, wherein said bottom part comprises a superior surface (44), wherein said superior surface (44) comprises a structured shape configured for engaging to inferior surface (42) of said bottom plate (17) of said top part (16).

10. The container (12) as in claim 4, wherein said bottom part comprises at least one structural element selected from the group consisting of: a reinforcement rib, circular ridge and polygonal ridge.

11. The container (12) as in claim 9, wherein said superior surface (44) of said bottom plate (17) of said top part (16) comprises at least one structural element configured for affixing articles in said container (12).

12. The container (12) as in claim 4, further comprises a lid, wherein said lid is attachable to said surrounding sidewalls (18) by at least one mechanism selected from the group of: an interlocking mechanism, snap-on mechanism and hinged mechanism.

13. A system (200) for manufacturing containers with unwarped internal partition from polymeric materials comprises:
(a) at least one first premanufacturing subsystem (214), comprising at least one mold embodying an inverted shape of a bottom part of said container;
(b) at least one second premanufacturing subsystem (216), comprising at least one member selected from the group consisting of: a mold embodying an inverted shape of a top part of said container and an extruder nozzle comprising a profile of a shape said top part of said container;
wherein said at least one member further comprises:
(I) a void volume of an inverted shape of surrounding sidewalls, wherein an interior profile of said surrounding sidewalls essentially matching an exterior profile of said bottom plate;
(II) a void volume of an inverted shape of at least one monolithic interior partition, configured for dividing an interior volume of said container into at least two distinct compartments;
wherein said interior partition extends essentially an entire distance in-between two opposing sidewalls, of said surrounding sidewalls;
wherein said void volume of said inverted shape of said at least one interior partition forms a continuum with said void volume of said inverted shape of said surrounding sidewalls;
(c) at least one preheater (218), configured to apply preheating treatment to said bottom part;
(d) an appending mechanism (220) configured appending said top part of said container to a preheated bottom part;
(e) a welding machine (222), configured for fusing a bottom edge of said top part with a top edge of said bottom part, thereby forming a welded complex of said container;
(f) a cooler (224) configured for cooling down said welded complex of said container, thereby stretching said at least one interior partition and facilitating forming of a container with an unwarped internal partition.

14. The system as in claim 13, wherein said interior profile of said surrounding sidewalls is configured to overlap with said exterior profile of said bottom part.

15. The system as in claim 13, wherein said welding machine (222) comprises an ultrasonic welding machine.
